# EUROPÄISCHE PATENTSCHRIFT

(11) **EP 3 741 734 B1**
(45) Veröffentlichungstag und Bekanntmachung des Hinweises auf die Patenterteilung: **06.07.2022**
(21) Anmeldenummer: 19175953.9
(22) Anmeldetag: 22.05.2019
(51) Int. Cl.: C04B 28/18, C04B 40/02, C04B 111/28

(54) **BAUPLATTE MIT HOHEM FEUERWIDERSTAND**
BUILDING PANEL WITH HIGH FIRE RESISTANCE
PANNEAU DE CONSTRUCTION À HAUTE RÉSISTANCE AU FEU

(43) Veröffentlichungstag der Anmeldung: 25.11.2020
(60) Teilanmeldung: 22152483.8
(73) Patentinhaber: KNAUF AQUAPANEL GmbH, 44147 Dortmund (DE)
(72) Erfinder: KOSLOWSKI, Thomas, 44227 Dortmund (DE); SCHWIEBACHER, Werner, 50823 Köln (DE); MARTIN, Kai, 44225 Dortmund (DE); NAURATH, Bert, 44879 Bochum (DE); KLÖCKENER, Albert, 44147 Dortmund (DE)
(74) Vertreter: Berkenbrink, Kai-Oliver

(56) Entgegenhaltungen:
- EP-A1- 0 007 585
- EP-A1- 0 321 583
- EP-A1- 1 132 356
- CN-A- 1 559 954
- DE-A1- 2 461 781
- DE-C2- 2 463 044
- JP-A- S6 385 038
- JP-A- 2004 292 224
- US-A- 3 590 111
- US-A1- 2014 216 653
- DATABASE WPI Week 198240 30. August 1982 (1982-08-30) Thomson Scientific, London, GB; AN 1982-84839E XP2029991, YOSHIE, Y.; KOMAZAWA, S.: "MANUFACTURE OF INORGANIC REFRACTORY MOLDINGS", & JP S57 140351 A (NIPPON SYNTHETIC CHEM IND CO) 30. August 1982 (1982-08-30) & JP S57 140351 A (NIPPON SYNTHETIC CHEM IND CO) 30. August 1982 (1982-08-30)
- PODOBINA, L.V., ET AL.: "Development of the technology of production of air-entrained silicates with additive expanded perlite sand", CHEMICAL ABSTRACTS, Bd. 83, Nr. 6, 47419, 11. August 1975 (1975-08-11), Seite 256, XP000189203, Sb. Tr., Nauchno-Tekh. Ob'edin. "GruzNIIstrom" ISSN: 0009-2258
- DATABASE WPI Week 201655 Thomson Scientific, London, GB; AN 2016-23897P & CN 105 481 298 A (SHANDONG LUYANG ENERGY SAVING MATERIALS) 13 April 2016 (2016-04-13) & CN 105 481 298 A (LUYANG ENERGY-SAVING MAT CO LTD) 13 April 2016 (2016-04-13)

## Beschreibung

Die Erfindung betrifft eine Bauplatte mit hohem Feuerwiderstand.

Bauplatten werden im Trockenbau verwendet. Beispielsweise werden Bauplatten als Verkleidungselemente im Trockenbau verwendet, beispielsweise zur Verkleidung von Wänden oder Leitungen. Ferner werden Bauplatten beispielsweise zur Erstellung von Zwischenwänden verwendet. Insbesondere werden Bauplatten auch zur Herstellung von Lüftungskanälen verwendet.

Aus Gründen des Brandschutzes werden regelmäßig auch Bauplatten mit hohem Feuerwiderstand benötigt, die auch als Brandschutzplatten bezeichnet werden.

Bauplatten mit hohem Feuerwiderstand sind beispielsweise in Form von Bauplatten bekannt, die aus hydraulisch abgebundenem Zement hergestellt sind, insbesondere hydraulisch abgebundenem Portlandzement sowie Tonerde- oder Tonerdeschmelzzement.

Ferner sind Brandschutzplatten mit hohem Feuerwiderstand auch in Form von Calciumsilikat-Platten bekannt, also in Form von Bauplatten, die auf wenigstens einer mineralogischen Phase im Dreistoffsystem CaO-SiO₂-H₂O basieren. Eine mineralogische Phase aus diesem Dreistoffsystem wird regelmäßig auch als CSH-Phase und eine auf Basis einer solchen Phase hergestellte Bauplatte als CSH-Bauplatte bezeichnet.

Im Dreistoffsystem CaO-SiO₂-H₂O existieren sehr zahlreiche mineralogische Phasen, die sich hinsichtlich ihres jeweiligen Anteils an den Phasen CaO, SiO₂ und H₂O voneinander unterscheiden. Eine übliche mineralogische Phase im Dreistoffsystem CaO-SiO₂-H₂O, auf deren Basis Bauplatten hergestellt sind, ist beispielsweise die mineralogische Phase Tobermorit mit der chemischen Formel Ca₅Si₆O₁₇ . 5 H₂O.

Zahlreiche Substanzen, aus denen Bauplatten regelmäßig hergestellt werden, verleihen der Bauplatte jedoch keinen hohen Feuerwiderstand, weil sich diese Substanzen beispielsweise bei hoher, dauerhafter Beanspruchung durch Temperatur zersetzen oder verbrennen.

Um einen hohen Feuerwiderstand zu bieten, müssen Bauplatten jedoch für einen längeren Zeitraum einer dauerhaften Beaufschlagung bei hohen Temperaturen standhalten.

Ferner ist es regelmäßig gewünscht, dass die Bauplatten eine möglichst geringe Dichte aufweisen. Trotz der geringen Dichte ist es regelmäßig gleichzeitig gewünscht, dass die Platten eine hohe mechanische Stabilität, insbesondere auch unter mechanischer Beanspruchung aufweisen. Gleichzeitig ist es gewünscht, dass die Bauplatten dennoch mechanisch gut bearbeitbar sind, beispielsweise durch Bohren, Klammern oder Sägen.

Podobina, L.V., et al ("Development of the technology of production of air-entrained silicates with additive expanded perlite sand", Chemical Abstracts, Bd. 83, Nr. 6, 47419, 11. August 1975) beschreiben die Herstellung eines Produktes durch Autoklavierung einer Mischung aus Quarzsand, Brandkalk, expandiertem Perlit, Aluminiumpulver und Wasser. In US 3,590,111 wird die Herstellung einer Bauplatte durch Autoklavierung einer Mischung aus expandiertem Perlit, Calciumoxid und Asbestfasern beschrieben. EP 0 321 583 A1, JP S63 85038 A und WPI World Patent Information Derwent, Bd. 40, Nr. 82, XP002029991 offenbaren die Herstellung von geformten Artikeln für Bauzwecke, die Xonotlit und Fasern umfassen. CN 1559954 A offenbart ein expandiertes Perlit-Xonotlit-Verbundmaterial, hergestellt aus expandiertem Perlit, Xonotlitschlicker und alkaliresestenten Glasfasern, wobei der Xonotlitschlicker aus Quarzpulver und Kalk hergestellt ist.

Der vorliegenden Erfindung liegt die Aufgabe zugrunde, eine Bauplatte mit hohem Feuerwiderstand zur Verfügung zu stellen.

Eine weitere Aufgabe der Erfindung besteht darin, eine solche Bauplatte mit hohem Feuerwiderstand zur Verfügung zu stellen, die gleichzeitig mit einer geringen Dichte zur Verfügung gestellt werden kann.

Eine weitere Aufgabe der Erfindung besteht darin, eine solche Bauplatte mit hohem Feuerwiderstand zur Verfügung zu stellen, die mit einer geringen Dichte und dennoch gleichzeitig mit einer hohen mechanischen Stabilität, auch bei einer dauerhaften Beaufschlagung bei hohen Temperaturen für einen längeren Zeitraum, zur Verfügung gestellt werden kann.

Eine weitere Aufgabe der Erfindung besteht darin, eine solche Bauplatte mit hohem Feuerwiderstand zur Verfügung zu stellen, die mit einer geringen Dichte und dennoch gleichzeitig mit einer hohen mechanischen Stabilität, auch bei einer dauerhaften Beaufschlagung bei hohen Temperaturen für einen längeren Zeitraum, zur Verfügung gestellt werden kann, wobei die Bauplatte gleichzeitig mechanisch gut bearbeitbar ist.

Um eine solche Bauplatte zur Verfügung stellen zu können, wird erfindungsgemäß zur Verfügung gestellt eine Bauplatte mit hohem Feuerwiderstand, welche umfasst:
Xonotlit;
expandierten Perlit; und
Fasern; und
die weiteren Merkmale nach Anspruch 1

Die Erfindung beruht auf der überraschenden Erkenntnis, dass die vorstehenden Aufgaben gelöst werden können durch die zur Verfügungstellung einer Bauplatte mit hohem Feuerwiderstand, welche Xonotlit, expandierten Perlit, Fasern und die weiteren Merkmale nach Anspruch 1 umfasst.

Xonotlit ist ein Calciumsilikat mit Hydroxidionen, beziehungsweise ein Calciumsilikathydrat, aus dem Dreistoffsystem CaO-SiO₂-H₂O. Xonotlit weist die chemische Formel Ca₆[Si₆O₁₇](OH)₂ auf.

Der Vorteil des Bestandteils Xonotlit in der erfindungsgemäßen Bauplatte besteht darin, dass Xonotlit nicht brennbar ist und erst ab etwa 900°C beginnt, sich zu zersetzen. Hierdurch verleiht Xonotlit der erfindungsgemäßen Bauplatte einen hohen Feuerwiderstand. Gleichzeitig verleiht Xonotlit der Bauplatte aufgrund seiner hohen Festigkeit eine hohe mechanische Stabilität. Vorteilhaft an Xonotlit ist ferner, dass diese Phase gesundheitlich unbedenklich ist, so dass die erfindungsgemäße Bauplatte auch gut in Innenräumen verwendet werden kann.

Bevorzugt umfasst die erfindungsgemäße Bauplatte Xonotlit in einem Anteil von wenigstens 20 Masse-%, noch bevorzugter in einem Anteil im Bereich von 20 bis 50 Masse-% und noch bevorzugter in einem Anteil im Bereich von 20 bis 40 Masse-%.

Die hierin in Hinblick auf den Massenanteil eines Bestandteils der erfindungsgemäßen Bauplatte gemachten Angaben in Masse-% sind stets bezogen auf die Gesamtmasse der erfindungsgemäßen Bauplatte, soweit im Einzelfall nichts anderes angegeben ist.

In der erfindungsgemäßen Bauplatte hat der Bestandteil expandierter Perlit erhebliche Vorteile. So weist expandierter Perlit nur eine geringe Dichte beziehungsweise ein geringes Schüttgewicht auf, so dass aufgrund des Anteils an expandiertem Perlit in der Bauplatte eine solche Bauplatte mit einer geringen Dichte zur Verfügung gestellt werden kann. Gleichzeitig ist expandierter Perlit mechanisch stabil und weist einen hohen Feuerwiderstand auf, so dass durch die Verwendung von expandiertem Perlit in der Bauplatte gleichzeitig eine Bauplatte mit einer hohen mechanischen Stabilität, insbesondere auch bei einer dauerhaften Beaufschlagung bei hohen Temperaturen für einen längeren Zeitraum, zur Verfügung gestellt werden kann. Ferner ist expandierter Perlit gesundheitlich unbedenklich, so dass die Platte gut in Innenräumen anwendbar ist. Ferner lässt sich die Bauplatte aufgrund des Anteils an expandiertem Perlit gleichzeitig mechanisch gut bearbeiten.

Insbesondere hat sich erfindungsgemäß jedoch überraschend auch herausgestellt, dass expandierter Perlit besonders vorteilhaft ist für die Bauplatte aus Gründen, die sich aus der Herstellung einer erfindungsgemäßen Bauplatte ergeben. So kann das offene Porenvolumen des expandierten Perlits teilweise mit Xonotlit gefüllt sein. Dies ist dem Umstand geschuldet, dass die das Xonotlit bildenden Komponenten (also insbesondere eine Calciumoxid umfassende Komponente, eine Siliciumdioxid umfassende Komponente sowie Wasser) während der Herstellung der Bauplatte in das offene Porenvolumen des expandierten Perlits eindringen, dort Xonotlit ausbilden und die offenen Poren des expandierten Perlit entsprechend zumindest teilweise mit Xonotlit füllen. Diese zumindest teilweise Verfüllung der offenen Poren des expandierten Perlits mit Xonotlit erweist sich jedoch aus mehreren Gründen als vorteilhaft. So wird die Saugfähigkeit des expandierten Perlits durch die Verfüllung der offenen Poren mit Xonotlit erheblich reduziert, so dass für eine etwaige Imprägnierung der Bauplatte, beispielsweise mit einem Farbanstrich oder einer Hydrophobierung, nur eine geringe Menge eines Anstrich- oder Hydrophobierungsmittels benötigt wird, da der expandierte Perlit diesen Stoff weitgehend nur oberflächlich aufnimmt. Dies kann jedoch insbesondere dann vorteilhaft sein, wenn eine solche Imprägnierung organische Bestandteile umfasst, durch die der Feuerwiderstand der Bauplatte verschlechtert werden könnte. Ferner hat sich überraschend herausgestellt, dass die mechanische Stabilität des expandierten Perlits durch den teilweise in der offenen Porosität des expandierten Perlits eingelagerten Xonotlit erhöht wird. Hierdurch wird insgesamt auch die mechanische Stabilität der Bauplatte erhöht.

Insofern ist nach einer besonders bevorzugten Ausführungsform vorgesehen, dass die offenen Poren des expandierten Perlits teilweise mit Xonotlit gefüllt sind.

Überraschend hat sich erfindungsgemäß herausgestellt, dass insbesondere für die mechanische Stabilität der Bauplatte, insbesondere auch unter Brandbeanspruchung, die Korngröße des expandierten Perlits in der Bauplatte von besonderer Bedeutung sein kann. So lässt sich die mechanische Stabilität der erfindungsgemäßen Bauplatte zunehmend dadurch steigern, soweit der expandierte Perlit zunehmend mit einem Anteil in einer Korngröße von höchstens 1,5 mm in der Bauplatte vorliegt. Insoweit ist vorgesehen, dass der expandierte Perlit weitgehend oder auch vollständig mit einer Korngröße von höchstens 1,5 mm vorliegt.

Erfindungsgemäß ist vorgesehen, dass der expandierte Perlit zu wenigsten 50 Masse-%, noch bevorzugter zu wenigstens 90 Masse-% und noch bevorzugter zu 100 Masse-% in einer Korngröße unter 1,5 mm vorliegt. Ferner kann bevorzugt vorgesehen sein, dass der expandierte Perlit zu wenigsten 50 Masse-%, noch bevorzugter zu wenigstens 90 Masse-% und noch bevorzugter zu 100 Masse-% in einer Korngröße im Bereich von 0,01 bis 1,5 mm vorliegt. Die vorgemachten Angaben zu Massenanteilen des expandierten Perlits in einer bestimmten Korngröße sind jeweils bezogen auf die Gesamtmasse des expandierten Perlits in der erfindungsgemäßen Bauplatte.

Die Korngröße des expandierten Perlits in der Bauplatte kann bevorzugt auf Basis eines Anschliffs der Bauplatte bestimmt werden, insbesondere durch eine mikroskopische Analyse des Anschliffs, besonders bevorzugt mikroskopisch durch bildgebende, computergestützte Analyseprogramme. Bevorzugt umfasst die erfindungsgemäße Bauplatte den expandierten Perlit in einem Anteil im Bereich von 8 bis 20 Masse-%, noch bevorzugter in einem Anteil im Bereich von 10 bis 15 Masse-%.

Durch die Fasern in der erfindungsgemäßen Bauplatte kann deren mechanische Festigkeit noch weiter erhöht werden. Die Bauplatte bildet insoweit einen faserverstärkten Verbundwerkstoff, bei dem die Fasern in die aus dem Xonotlit gebildete Matrix der Bauplattet eingebettet sind.

Bevorzugt umfasst die erfindungsgemäße Bauplatte Fasern in einem Anteil im Bereich von 1,5 bis 10 Masse-%, noch bevorzugter in einem Anteil im Bereich von 2 bis 8 Masse-%.

Nach einer besonders bevorzugten Ausführungsform liegen die Fasern in Form wenigstens einer der folgenden Arten von Fasern vor: organische Fasern oder anorganische Fasern.

Organische Fasern können bevorzugt in Form wenigstens einer der folgenden Arten von Fasern vorliegen: Cellulosefasern oder Kohlenstofffasern. Soweit die organischen Fasern in Form von Cellolosefasern vorliegen, können diese besonders bevorzugt in Form von Kraftcellulosefasern vorliegen.

Cellulosefasern, insbesondere in Form von Kraftcellulosefasern, umfasst die Bauplatte bevorzugt in einem Anteil im Bereich von 1 bis 6 Masse-%, noch bevorzugter in einem Anteil im Bereich von 1 bis 4 Masse-%.

Bevorzugt weisen die Cellulosefasern, insbesondere in Form von Kraftcellulosefasern, wenigstens eine der folgenden Geometrien auf: einen mittleren Faserdurchmesser im Bereich von 10 bis 30 µm oder eine mittlere Faserlänge im Bereich von 0,5 bis 3 mm.

Anorganische Fasern können bevorzugt in Form von Glasfasern vorliegen, besonders bevorzugt in Form wenigstens einer der folgenden Arten von Glasfasern vorliegen: AES-Fasern, Mineralfasern, Basaltfasern, Tonerde-Fasern (Al₂O₃-Fasern) oder Silikatfasern (SiO₂-Fasern).

Nach einer besonders bevorzugten Ausführungsform ist vorgesehen, dass die Glasfasern in Form von AES-Fasern vorliegen. Unter "AES-Fasern" (= Alkaline-Earth-Silicate-Fasern) werden bekanntermaßen Glasfasern verstanden, die auf dem Stoffsystem MgO-CaO-SiO₂ basieren, also Erdalkali-Silikat-Fasern. Besonders bevorzugt liegen die AES-Fasern hochrein vor, also mit nur einem sehr geringen Anteil an weiteren Oxiden neben den Oxiden MgO, CaO und SiO₂, da die Fasern hierdurch einen hohen Feuerwiderstand bilden und hohen Anwendungstemperaturen standhalten. Ein Vorteil an AES-Fasern besteht insbesondere auch darin, dass diese nicht als Gefahrstoff klassifiziert sind, insbesondere nicht karzinogen sind, so dass die erfindungsgemäße Bauplatte, soweit sie AES-Fasern umfasst, ohne weiteres in Innenräumen verwendet werden kann. Soweit die Glasfasern in Form von AES-Fasern vorliegen, weisen diese bevorzugt eine chemische Zusammensetzung mit einem Anteil an SiO₂ von wenigstens 60 Masse-% auf, noch bevorzugter mit einem Anteil im Bereich von 60 bis 90 Masse-%, noch bevorzugter mit einem Anteil im Bereich von 60 bis 85 Masse-% und noch bevorzugter mit einem Anteil im Bereich von 70 bis 85 Masse-%. Ferner weisen die AES-Fasern, soweit sie die vorstehenden chemischen Anteile an SiO₂ aufweisen, bevorzugt eine chemische Zusammensetzung mit einem Anteil an MgO und CaO in einer Gesamtmasse im Bereich von 10 bis 40 Masse-%, noch bevorzugter mit einem Anteil im Bereich von 15 bis 40 Masse-% und noch bevorzugter mit einem Anteil im Bereich von 15 bis 30 Masse-% auf. Nach einer bevorzugten Ausführungsform ist vorgesehen, dass die AES-Fasern, soweit sie die vorstehenden chemischen Anteile an SiO₂, MgO und CaO aufweisen, einen Anteil an weiteren chemischen Substanzen in einem Anteil unter 3 Masse-% aufweisen. Die vorstehenden Angaben zur chemischen Zusammensetzung der AES-Fasern sind bezogen auf die Gesamtmasse der Glasfasern in der erfindungsgemäßen Bauplatte.

Bevorzugt umfasst die erfindungsgemäße Bauplatte Glasfasern, insbesondere in Form von AES-Fasern, in einem Anteil im Bereich von 0,5 bis 5 Masse-%, noch bevorzugter in einem Anteil im Bereich von 0,5 bis 4 Masse-%.

Bevorzugt umfasst die erfindungsgemäße Bauplatte solche Glasfasern, insbesondere mit der vorstehenden chemischen Zusammensetzung auf, die eine Klassifikationstemperatur gemäß DIN EN 1094-1:2008-09 von wenigstens 1.200°C aufweisen.

Bevorzugt weisen die Glasfasern einen mittleren Faserdurchmesser im Bereich von 5 bis 10 µm, noch bevorzugter im Bereich von 7 bis 9 µm auf.

Bevorzugt weisen die AES-Fasern wenigstens eine der folgenden Geometrien auf: einen mittleren Faserdurchmesser im Bereich von 5 bis 15 µm (noch bevorzugter im Bereich von 7 bis 9 µm) oder eine mittlere Faserlänge im Bereich von 1 bis 10 mm.

Nach einer besonders bevorzugten Ausführungsform liegen die Fasern in Form von AES-Fasern und Kraftcellulosefasern vor.

In der erfindungsgemäßen Bauplatte bildet Xonotlit eine Matrix, in die der expandierte Perlit und die Fasern eingebettet sind.

Der expandierte Perlit und die Fasern sind bevorzugt gleichmäßig über das Volumen der erfindungsgemäßen Bauplatte verteilt.

Wie oben ausgeführt, sind Bauplatten mit hohem Feuerwiderstand, insbesondere sogenannte Brandschutzplatten, insbesondere in Form von zementgebundenen Platten bekannt, insbesondere auf Basis von hydraulisch abbindenden Zementen wie Portlandzementen und Tonerdezementen, insbesondere Tonerdeschmelzzementen. Erfindungsgemäß wurde jedoch festgestellt, dass durch solche Zemente der Feuerwiderstand und insbesondere auch die mechanische Festigkeit der erfindungsgemäßen Bauplatte verschlechtert werden kann. Insbesondere können diese Zemente auch die mechanische Stabilität des Xonotlits während einer Beaufschlagung der Bauplatte mit Temperatur nachteilig beeinträchtigen. Daher ist nach einer bevorzugten Ausführungsform vorgesehen, dass die erfindungsgemäße Bauplatte keine oder nur geringste Anteile an Zementen, insbesondere an Portlandzementen, Tonerdezementen oder Tonerdeschmelzzementen aufweist.

Bevorzugt weist die erfindungsgemäße Bauplatte Zemente, insbesondere hydraulisch abbindende Zemente, insbesondere, Portlandzemente Tonerdezemente und Tonerdeschmelzzemente, nur in einem Anteil unter 10 Masse-%, noch bevorzugter in einem Anteil unter 5 Masse-% und noch bevorzugter in einem Anteil unter 1 Masse-% auf.

Nach einer bevorzugten Ausführungsform umfasst die erfindungsgemäße Bauplatte Xonotlit, den expandierten Perlit und die Fasern in einem Anteil von wenigstens 33 Masse-%. Ferner kann bevorzugt vorgesehen sein, dass die erfindungsgemäße Bauplatte den Xonotlit, den expandierten Perlit und die Fasern in einem Anteil von höchsten 63 Masse-% umfasst. Nach einer bevorzugten Ausführungsform umfasst die erfindungsgemäße Bauplatte Xonotlit, den expandierten Perlit und die Fasern in einem Anteil im Bereich von 33 bis 63 Masse-%, noch bevorzugter in einem Anteil im Bereich von 35 bis 55 Masse-%.

Als weiteren Bestandteil kann die erfindungsgemäße Bauplatte Anhydrid umfassen.

Eine solche Komponente in Form von Anhydrid, also CaSO₄, hat insbesondere den Vorteil, dass das Xonotlit durch das Anhydrid stabilisiert wird, insbesondere bei Temperaturbeaufschlagung der Bauplatte. Insoweit zersetzt sich Anhydrid ab einer Temperatur von etwa 1.180°C endotherm, wodurch die erfindungsgemäße Bauplatte gekühlt und die Zersetzung des Xonotlits verzögert werden kann.

Bevorzugt umfasst die erfindungsgemäße Bauplatte Anhydrid in einem Anteil im Bereich von 0,5 bis 5 Masse-%, noch bevorzugter in einem Anteil im Bereich von 0,8 bis 2 Masse-%.

Als weiteres Bestandteil kann die erfindungsgemäße Bauplatte Calciumcarbonat umfassen.

Calciumcarbonat, also CaCO₃, kann in der erfindungsgemäßen Bauplatte in wenigstens einer der folgenden mineralogischen Phasen vorliegen: Calcit, Aragonit oder Vaterit.

Ebenso wie Anhydrid hat auch Calciumcarbonat den Vorteil, Xonotlit in der Bauplatte zu stabilisieren, insbesondere bei Temperaturbeaufschlagung. So beginnt Calciumcarbonat ab einer Temperatur von etwa 825°C sich endotherm zu zersetzen, wodurch die Bauplatte ebenfalls gekühlt und die Zersetzung des Xonotlits gehemmt werden kann.

Bevorzugt umfasst die erfindungsgemäße Bauplatte Calciumcarbonat in einem Anteil im Bereich von 1 bis 10 Masse-%, noch bevorzugter in einem Anteil im Bereich von 1 bis 5 Masse-%.

Nach einer bevorzugten Ausführungsform ist vorgesehen, dass die erfindungsgemäße Bauplatte den Xonotlit, den expandierten Perlit, die Fasern, das Anhydrid und das Calciumcarbonat in einem Anteil von wenigstens 35 Masse-% umfasst. Ferner kann bevorzugt vorgesehen sein, dass die erfindungsgemäße Bauplatte den Xonotlit, den expandierten Perlit, die Fasern, das Anhydrid und das Calciumcarbonat in einem Anteil von höchsten 70 Masse-% umfasst. Nach einer bevorzugten Ausführungsform ist vorgesehen, dass die erfindungsgemäße Bauplatte den Xonotlit, den expandierten Perlit, die Fasern, das Anhydrid und das Calciumcarbonat in einem Anteil im Bereich von 35 bis 70 Masse-%, noch bevorzugter in einem Anteil im Bereich von 37 bis 57 Masse-% umfasst.

Bei der Herstellung der erfindungsgemäßen Bauplatte, insbesondere durch das wie unten näher beschriebene Verfahren, kann es zur Bildung weiterer Phasen kommen. Bei diesen weiteren Phasen kann es sich insbesondere um Phasen im Dreistoffsystem CaO-SiO₂-H₂O handeln, die nicht in Form von Xonotlit vorliegen (nachfolgend als "weitere CSH-Phasen" bezeichnet). Insbesondere können diese weiteren CSH-Phasen in Form wenigstens ein der folgenden Phasen vorliegen: Scawtit (Ca₇Si₆O₁₈CO₃(H₂O)₂), Tobermorit oder röntgenamorphe calciumsilikatische Phasen (sogenannte "calciumsilikatische Gelphasen" oder "CS-Gelphasen").

Bevorzugt kann insoweit vorgesehen sein, dass die erfindungsgemäße Bauplatte solch weitere CSH-Phasen in einem Anteil unter 65 Masse-%, insbesondere in einem Anteil im Bereich von 30 bis 65 Masse-% und noch bevorzugter in einem Anteil im Bereich von 43 bis 63 Masse-% umfasst.

Bevorzugt umfasst die erfindungsgemäße Bauplatte Tobermorit in einem Anteil von höchstens 25 Masse-%, bevorzugter in einem Anteil im Bereich von 10 bis 25 Masse-% und noch bevorzugter in einem Anteil im Bereich von 10 bis 20 Masse-%.

Bevorzugt umfasst die erfindungsgemäße Bauplatte Scawtit in einem Anteil von höchstens 10 Masse-%, bevorzugter in einem Anteil im Bereich von 1 bis 10 Masse-% und noch bevorzugter in einem Anteil im Bereich von 1 bis 8 Masse-%.

Bevorzugt umfasst die erfindungsgemäße Bauplatte röntgenamorphe calciumsilikatische Phasen in einem Anteil im Bereich von 20 bis 30 Masse-%.

Nach einer Ausführungsform kann vorgesehen sein, dass die erfindungsgemäße Bauplatte den Xonotlit, den expandierten Perlit, die Fasern, das Anhydrid, das Calciumcarbonat sowie die weiteren CSH-Phasen in einer Gesamtmasse von wenigstens 92 Masse-% umfasst. Nach einer Ausführungsform kann vorgesehen sein, dass die erfindungsgemäße Bauplatte den Xonotlit, den expandierten Perlit, die Fasern, das Anhydrid, das Calciumcarbonat sowie die weiteren CSH-Phasen in einem Anteil im Bereich von 92 bis 100 Masse-% und noch bevorzugter in einem Anteil im Bereich von 96 bis 100 Masse-% umfasst.

Die erfindungsgemäße Bauplatte kann Anteile an Quarz umfassen, die insbesondere aus der Herstellung der erfindungsgemäßen Bauplatte, insbesondere durch das wie unten näher beschriebene, erfindungsgemäße Verfahren, resultieren können. Bevorzugt weist die die erfindungsgemäße Bauplatte Quarz in einem Anteil von höchstens 10 Masse-% auf, bevorzugter in einem Anteil im Bereich von 1 bis 10 Masse-% und noch bevorzugter in einem Anteil im Bereich von 1 bis 5 Masse-%.

Die mineralogische Zusammensetzung der Platte wird bevorzugt mittels Röntgenbeugungsanalyse bestimmt, besonders bevorzugt mittels Rietveld-Methode.

Hinsichtlich der chemischen Zusammensetzung der Platte weist diese bevorzugt einen Anteil an SiO₂ von 40 bis 50 Masse-%, noch bevorzugter von 42 bis 48 Masse-%, und einen Anteil an CaO von 35 bis 45 Masse-%, noch bevorzugter von 36 bis 43 Masse-% und noch bevorzugter von 38 bis 43 Masse-% auf.

Die chemische Zusammensetzung der Platte wird mittels Röntgenfluoreszenzanalyse gemäß DIN EN ISO 12677: 2013-02 bestimmt.

Ferner kann die chemische Zusammensetzung der Platte einen Glühverlust in einem Anteil im Bereich von 5 bis 15 Masse-% aufweisen. Der Glühverlust kann insbesondere verursacht sein durch Kristallwasser und Cellulosefasern in der Bauplatte.

Bevorzugt weist die Platte eine chemische Zusammensetzung mit einem Anteil an Al₂O₃ unter 3 Masse-%, insbesondere im Bereich von 1 bis < 3 Masse-% auf.

Ferner weist die Platte bevorzugt eine chemische Zusammensetzung auf, wonach Fe₂O₃, SO₃, MgO, K₂O und Na₂O jeweils mit einem Anteil unter 1 Masse-% vorliegen, wobei in der Bauplatte eines, mehrere oder sämtliche dieser Substanzen mit einem solchen Anteil unter 1 Masse-% vorliegen können.

Bevorzugt weist die Platte eine chemische Zusammensetzung auf, wonach der Anteil an SiO₂ und CaO wenigstens 80 Masse-% beträgt und bevorzugt einen Anteil an SiO₂ und CaO im Bereich von 80 bis 90 Masse-%, noch bevorzugter in einem Anteil im Bereich von 82 bis 88 Masse-%.

Ferner liegt in Hinblick auf die chemische Zusammensetzung der Bauplatte das Massenverhältnis von CaO zu SiO₂ bevorzugt unter 1,0 und insbesondere im Bereich von 0,85 bis < 1,0.

Aufgrund des expandierten Perlits in der erfindungsgemäßen Bauplatte ist es möglich, diese mit einer geringen Dichte zur Verfügung zu stellen. Bevorzugt weist die erfindungsgemäße Bauplatte eine Dichte von höchstens 900 kg/m³ auf. Besonders bevorzugt liegt die Dichte der Bauplatte im Bereich von 400 bis 900 kg/m³. Die Dichte ist bestimmt nach Trocknung bei 105°C bis zur Gewichtskonstanz.

Bevorzugt weist die erfindungsgemäße Bauplatte eine Dicke im Bereich von 10 bis 60 mm auf.

Aufgrund der hohen mechanischen Stabilität, insbesondere auch bei Brandbeanspruchung, kann die erfindungsgemäße Bauplatte mit einer hohen Länge zur Verfügung gestellt werden. Insoweit kann die erfindungsgemäße Bauplatte einer Länge von bis zu 2,5 m aufweisen.

Die erfindungsgemäße Bauplatte kann insbesondere die Klassifikation "Nichtbrennbar A1" gemäß DIN EN 13501-1: 2010-01 erfüllen.

Insbesondere kann die erfindungsgemäße Bauplatte jedoch mit einem hohen Feuerwiderstand zur Verfügung gestellt werden, wobei die Platte insbesondere auch unter dauernder Brandbeanspruchung mechanisch stabil bleibt. Insbesondere weist die erfindungsgemäße Bauplatte eine mechanische Stabilität für mindestens 90 Minuten bei Beaufschlagung mit Temperatur gemäß der Einheitstemperaturkurve nach DIN EN 1363-1:2012-10 auf.

Die erfindungsgemäße Bauplatte wird, wie nachfolgend ausgeführt, bevorzugt im Autoklaven gehärtet. Nach ihrer Härtung im Autoklaven kann die Bauplatte mit weiteren Komponenten versehen werden, beispielsweise einer Imprägnierung (wie beispielsweise einer Hydrophobierung oder einem sonstigen Anstrich), einer Kaschierung (beispielsweise einer Metallkaschierung) oder mit Befestigungsmitteln (beispielsweise Klammern, angeschraubten Profilen etc.). Diese weiteren Komponenten sind bei den vorbezeichneten Angaben zu den Massenanteilen von Bestandteilen der Bauplatte bei der Gesamtmasse der Bauplatte nicht berücksichtigt.

Zur Herstellung einer Bauplatte mit hohem Feuerwiderstand wird ein Verfahren zur Verfügung gestellt, welches lediglich offenbart und somit nicht Gegenstand der Erfindung ist, das die folgenden Schritte umfasst:
Zur Verfügungsstellung eines Versatzes, umfassend:
   eine Calciumoxid umfassende Komponente;
   eine Siliciumdioxid umfassende Komponente;
   expandierten Perlit;
   Fasern; und
   Wasser;
Formen des Versatzes;
Beaufschlagen des geformten Versatzes mit Druck und Temperatur derart, dass die Calciumoxid umfassende Komponente, die Siliciumdioxid umfassende Komponente und das Wasser Xonotlit bilden.

Besonders bevorzugt dient das Verfahren zur Herstellung einer hierin beschriebenen, erfindungsgemäßen Bauplatte, so dass die durch das Verfahren hergestellte Bauplatte besonders bevorzugt die hierin beschriebenen Merkmale der erfindungsgemäßen Bauplatte aufweisen kann.

Das Verfahren beruht insbesondere auf der überraschenden Erkenntnis, dass sich Bauplatten mit hohem Feuerwiderstand und den hierin näher bezeichneten Eigenschaften der erfindungsgemäßen Bauplatte herstellen lassen, soweit diese Bauplatten aus einem Versatz hergestellt werden, der eine Calciumoxid umfassende Komponente, eine Siliciumdioxid umfassende Komponente, expandierten Perlit, Fasern und Wasser umfasst, wobei der Versatz geformt wird und der geformte Versatz anschließend derart mit Druck und Temperatur beaufschlagt wird, dass die Calciumoxid umfassende Komponente und die Siliciumdioxid umfassende Komponente mit dem Wasser Xonotlit ausbilden. Besonders überraschend ist die erfindungsgemäße Erkenntnis, dass eine solche Bauplatte mit den hierin beschriebenen, vorteilhaften Eigenschaften hergestellt werden kann, soweit der Versatz expandierten Perlit umfasst.

So hat die Verwendung von expandiertem Perlit zum einen die oben bezeichneten, erheblichen Vorteile für die durch das Verfahren hergestellte Bauplatte, nämlich insbesondere die Reduzierung der Dichte der Bauplatte bei einer gleichzeitig hohen Festigkeit, einem guten Feuerwiderstand sowie einer guten mechanischen Bearbeitbarkeit der Bauplatte.

Darüber hinaus hat die Verwendung von expandiertem Perlit jedoch auch erhebliche Vorteile bei der Herstellung der Bauplatte: So hat sich überraschend herausgestellt, dass insbesondere das hohe Saugvermögen des expandierten Perlits, das dieser aufgrund seiner hohen offenen Porosität aufweist, sehr vorteilhaft bei der Herstellung der Bauplatte ist. Denn aufgrund des hohen Saugvermögens des expandierten Perlits kann das für die Ausbildung des Xonotlits notwendige Wasser des Versatzes vom expandierten Perlit weitgehend aufgenommen und später wieder an den Versatz abgegeben werden, insbesondere während des Beaufschlagens des geformten Versatzes mit Druck und Temperatur und der sich daraus ergebenden Bildung von Xonotlit. Durch die Aufnahme des Wassers des Versatzes im expandierten Perlit ist jedoch auch ein Versatz mit einem hohen Wasseranteil noch leicht zu bearbeiten und kann insbesondere keine schlickerartige, sondern vielmehr eine erdfeuchte Konsistenz aufweisen. Aufgrund dieser erdfeuchten Konsistenz des Versatzes ist dieser jedoch besonders einfach zu bearbeiten, insbesondere auch besonders einfach zu formen. Insbesondere muss der Versatz vor einer Formung nicht zusätzlich getrocknet werden.

Insoweit kann das Verfahren insbesondere als Halbtrockenverfahren ausgeführt werden.

Um diese vorteilhaften Eigenschaften während der Herstellung der Bauplatte durch das Verfahren erfüllen zu können, wird bevorzugt ein expandierter Perlit mit einer hohen offenen Porosität zur Verfügung gestellt, wobei der expandierte Perlit bevorzugt eine offene Porosität mit einem Anteil von über 90 Vol.-% aufweist, bezogen auf das Gesamtvolumen des expandierten Perlits.

Ferner hat sich erfindungsgemäß herausgestellt, dass der expandierte Perlit insbesondere dann die vorstehenden, vorteilhaften Funktionen während der Herstellung der Bauplatte durch das Verfahren erfüllt, wenn dieser in einer spezifischen Korngröße vorliegt.

Insoweit ist vorgesehen, dass der expandierte Perlit weitgehend oder auch vollständig mit einer Korngröße von höchstens 1,5 mm vorliegt.

Es ist vorgesehen, dass der expandierte Perlit im Versatz des Verfahrens zu wenigsten 50 Masse-%, noch bevorzugter zu wenigstens 90 Masse-% und noch bevorzugter zu 100 Masse-% in einer Korngröße unter 1,5 mm vorliegt. Ferner kann bevorzugt vorgesehen sein, dass der expandierte Perlit zu wenigsten 50 Masse-%, noch bevorzugter zu wenigstens 90 Masse-% und noch bevorzugter zu 100 Masse-% in einer Korngröße im Bereich von 0,01 bis 1,5 mm vorliegt. Die vorgemachten Angaben zu Massenanteilen des expandierten Perlits in einer bestimmten Korngröße sind jeweils bezogen auf die Gesamtmasse des expandierten Perlits im Versatz. Die Korngröße des expandierten Perlits kann durch Siebung gemäß DIN EN 13055: 2016-11 bestimmt werden.

Bevorzugt umfasst der Versatz des Verfahrens den expandierten Perlit in einem Anteil im Bereich von 5 bis 20 Masse-%, noch bevorzugter in einem Anteil im Bereich von 5 bis 15 Masse-%.

Die hierin in Hinblick auf die Massenanteile einer Komponente des Versatzes gemachten Angaben in Masse-% sind stets bezogen auf die Gesamtmasse des Versatzes, soweit im Einzelfall nichts anderes angegeben ist.

Erfindungsgemäß wurde festgestellt, dass Xonotlit bei der Durchführung des Verfahrens aus der Calciumoxid umfassenden Komponente und der Siliciumdioxid umfassenden Komponente zusammen mit dem Wasser insbesondere dann bildbar ist, wenn das Massenverhältnis des chemischen Anteils an CaO zum chemischen Anteil an SiO₂ in der Gesamtmasse aus der Calciumoxid umfassenden Komponente und der Siliciumdioxid umfassenden Komponente (also das sogenannte C/S-Verhältnis) über 1,00 liegt und insbesondere über 1,00 und insbesondere bei höchstens 1,20 liegt. Insoweit ist bevorzugt vorgesehen, dass das Massenverhältnis des chemischen Anteils an CaO zum chemischen Anteil an SiO₂ in der Gesamtmasse aus der Calciumoxid umfassenden Komponente und der Siliciumdioxid umfassenden Komponente im Versatz des Verfahrens über 1,00, ferner bevorzugt bei höchstens 1,20 liegt und besonders bevorzugt im Bereich von 1,05 bis 1,15 liegt.

Die Calciumoxid (CaO) umfassende Komponente des Versatzes kann eine oder mehrere Calciumoxid umfassende Substanzen umfassen. Soweit die Calciumoxid umfassende Komponente Calciumoxid umfasst, muss dieses nicht in Form von Calciumoxid vorliegen. Vielmehr ist Calciumoxid allein chemischer Bestandteil der Calciumoxid umfassenden Komponente, so dass das Calcium beispielsweise auch in einer anderen Form als in Form eines Oxides vorliegen kann, beispielsweise als Hydroxid.

Nach einer bevorzugten Ausführungsform umfasst die Calciumoxid umfassende Komponente des Versatzes Calciumhydroxid, also Ca(OH)₂. Nach einer besonders bevorzugten Ausführungsform liegt die Calciumoxid umfassende Komponente in Form von Calciumhydroxid vor.

Bevorzugt umfasst der Versatz die Calciumoxid umfassende Komponente in einem Anteil in einem Bereich von 30 bis 40 Masse-%, noch bevorzugter in einem Anteil im Bereich von 32 bis 38 Masse-%.

Die Siliciumdioxid (SiO₂) umfassende Komponente des Versatzes kann eine oder mehrere Siliciumdioxid umfassende Substanzen umfassen. Soweit die Siliciumdioxid umfassende Komponente Siliciumdioxid umfasst, muss dieses nicht in Form von Siliciumdioxid vorliegen. Vielmehr ist Siliciumdioxid allein chemischer Bestandteil der Siliciumdioxid umfassenden Komponente, so dass das Silicium beispielsweise auch in einer anderen Form als in Form eines Oxides vorliegen kann, beispielsweise als Kieselsäure.

Nach einer bevorzugten Ausführungsform umfasst die Siliciumdioxid umfassende Komponente des Versatzes Quarz. Nach einer bevorzugten Ausführungsform liegt die Siliciumdioxid umfassende Komponente in Form von Quarz vor. Besonders bevorzugt liegt dieser Quarz feinkörnig vor, insbesondere in Form von Quarzmehl. Nach einer bevorzugten Ausführungsform liegt Quarz beziehungsweise Quarzmehl zu wenigstens 95 Masse-%, bezogen auf die Gesamtmasse des Quarzes, in einer Korngröße unter 200 µm, noch bevorzugter unter 160 µm vor.

Bevorzugt umfasst der Versatz die Siliciumdioxid umfassende Komponente in einem Anteil im Bereich von 17 bis 27 Masse-%, noch bevorzugter in einem Anteil im Bereich von 20 bis 25 Masse-%.

Bevorzugt umfasst der Versatz Fasern in einem Anteil im Bereich von 1 bis 10 Masse-%, noch bevorzugter in einem Anteil im Bereich von 1,5 bis 8 Masse-%.

Nach einer besonders bevorzugten Ausführungsform liegen die Fasern in Form wenigstens einer der folgenden Arten von Fasern vor: organische Fasern oder anorganische Fasern.

Organische Fasern können bevorzugt in Form wenigstens einer der folgenden Arten von Fasern vorliegen: Cellulosefasern oder Kohlenstofffasern. Soweit die organischen Fasern in Form von Cellolosefasern vorliegen, können diese besonders bevorzugt in Form von Kraftcellulosefasern vorliegen.

Cellulosefasern, insbesondere in Form von Kraftcellulosefasern, umfasst der Versatz bevorzugt in einem Anteil im Bereich von 0,5 bis 6 Masse-%, noch bevorzugter in einem Anteil im Bereich von 1 bis 4 Masse-%.

Bevorzugt weisen die Cellulosefasern, insbesondere in Form von Kraftcellulosefasern, wenigstens eine der folgenden Geometrien auf: einen mittleren Faserdurchmesser im Bereich von 10 bis 30 µm oder eine mittlere Faserlänge im Bereich von 0,5 bis 3 mm.

Anorganische Fasern können bevorzugt in Form von Glasfasern vorliegen, besonders bevorzugt in Form wenigsten seiner der folgenden Arten von Glasfasern vorliegen: AES-Fasern, Mineralfasern, Basaltfasern, Tonerde-Fasern (Al₂O₃-Fasern) oder Silikatfasern (SiO₂-Fasern)

Nach einer besonders bevorzugten Ausführungsform ist vorgesehen, dass die Glasfasern in Form von AES-Fasern vorliegen. Die AES-Fasern können bevorzugt die Eigenschaften der AES-Fasern der erfindungsgemäßen Bauplatte aufweisen.

Bevorzugt umfasst der Versatz Glasfasern, insbesondere in Form von AES-Fasern, in einem Anteil im Bereich von 0,5 bis 5 Masse-%, noch bevorzugter in einem Anteil im Bereich von 0,5 bis 4 Masse-%.

Bevorzugt umfasst der Versatz solche Glasfasern, insbesondere mit der vorstehenden chemischen Zusammensetzung auf, die eine Klassifikationstemperatur gemäß DIN EN 1094-1:2008-09 von wenigstens 1.200°C aufweisen.

Bevorzugt weisen die Glasfasern einen mittleren Faserdurchmesser im Bereich von 5 bis 10 µm, noch bevorzugter im Bereich von 7 bis 9 µm auf.

Bevorzugt weisen die AES-Fasern wenigstens eine der folgenden Geometrien auf: einen mittleren Faserdurchmesser im Bereich von 5 bis 15 µm (noch bevorzugter im Bereich von 7 bis 9 µm) oder eine mittlere Faserlänge im Bereich von 1 bis 10 mm.

Nach einer besonders bevorzugten Ausführungsform liegen die Fasern im Versatz in Form von AES-Fasern und Kraftcellulosefasern vor.

Bevorzugt umfasst der Versatz Wasser in einem Anteil in einem Bereich von 15 bis 35 Masse-%, noch bevorzugter in einem Anteil in einem Bereich von 20 bis 30 Masse-%.

Bezogen auf die Trockenmasse des Versatzes, also die Gesamtmasse des Versatzes ohne das Wasser, umfasst der Versatz die Calciumoxid umfassende Komponente, die Siliciumdioxid umfassende Komponente, den expandierten Perlit und die Fasern bevorzugt in einem Anteil von wenigstens 95 Masse-%, noch bevorzugter in einem Anteil von wenigstens 97 Masse-%.

Nach einer bevorzugten Ausführungsform umfasst der Versatz die Calciumoxid umfassende Komponente, die Siliciumdioxid umfassende Komponente, den expandierten Perlit, die Fasern und das Wasser in einem Anteil von wenigstens 96 Masse-%, noch bevorzugter in einem Anteil von wenigstens 97 Masse-%.

Nach einer bevorzugten Ausführungsform umfasst der Versatz Anhydrit in einem Anteil im Bereich von 0,5 bis 3 Masse-%, noch bevorzugter in einem Anteil im Bereich von 1 bis 2 Masse-%.

Nach einer bevorzugten Ausführungsform ist vorgesehen, dass der Versatz einen Verdicker umfasst. Ein solcher Verdicker ist eine Komponente, durch die der Versatz eindickt, so dass dieser leichter zu handhaben ist. Nach einer bevorzugten Ausführungsform liegt ein Verdicker in Form wenigstens eines der folgenden Stoffe vor: Methylcellulose, Xanthan, Guar oder Stärke. Besonders bevorzugt liegt der Verdicker in Form von Methylcellulose vor, besonders bevorzugt in Form einer modifizierten Methylhydroxyethylcellulose vor, insbesondere in Form einer wasserlöslichen, nicht ionischen, hochveretherten Methylhydroxyethylcellulose. Bevorzugt umfasst der Versatz Verdicker in einem Anteil im Bereich von 0,2 bis 0,6 Masse-%.

Nach einer bevorzugten Ausführungsform ist vorgesehen, dass der Versatz einen Schaumbildner umfasst. Durch einen solchen Schaumbildner ist ein Schaum beziehungsweise sind Luftblasen im Versatz ausbildbar. Hierdurch kann die Dichte des Versatzes und entsprechend die Dichte der daraus hergestellten Bauplatte reduziert werden. Gleichzeitig kann durch einen solchen Schaumbildner der Versatz stabilisiert werden. Nach einer bevorzugten Ausführungsform liegt der Schaumbildner in Form eines Tensides vor. Beispielsweise kann ein Schaumbildner vorliegen in Form von Sika^{®} Schaumbildner SB 2 (Marke des Unternehmens Sika Deutschland GmbH). Bevorzug umfasst der Versatz Schaumbildner in einem Anteil im Bereich von 0,05 bis 0,25 Masse-%, noch bevorzugter in einem Anteil im Bereich von 0,05 bis 0,1 Masse-%.

Der Versatz des Verfahrens umfasst die Calciumoxid umfassende Komponente, die Siliciumdioxid umfassende Komponente, den expandierten Perlit, die Fasern, das Anhydrit, den Verdicker und den Schaumbildner sowie das Wasser bevorzugt in einem Anteil von wenigstens 97 Masse-%, noch bevorzugter in einem Anteil von wenigstens 99 % und gegebenenfalls auch zu 100 %, so dass der Versatz bevorzugt Anteile an diesen Komponenten im Bereich von 97 bis 100 Masse-% oder noch bevorzugter im Bereich von 99 bis 100 Masse-% umfassen kann.

Durch das Formen des Versatzes wird dem Versatz eine plattenförmige Gestalt verliehen. Bevorzugt wird der Versatz durch Pressen geformt. Vorteilhaft an dem Versatz des Verfahrens ist insbesondere auch, dass dieser durch eine Presse gemäß dem Stand der Technik zum Formen von Bauplatten geformt werden kann, beispielsweise eine Presse zum Formen von Zementbauplatten oder sonstigen Bauplatten für den Trockenbau. Da das Wasser des Versatzes, wie zuvor ausgeführt, weitgehend vom expandierten Perlit aufgesogen sein kann, erweisen sich die gepressten Platten als mechanisch sehr formstabil. Bevorzugt wird der Versatz durch einen Pressdruck im Bereich von 0,2 MPa bis 0,32 MPa gepresst.

Vorteilhaft an dem Umstand, dass das Wasser des Versatzes, wie zuvor ausgeführt, weitgehend vom expandierten Perlit aufgesogen sein kann, ist auch, dass beim Pressen des Versatzes praktisch kein Wasser aus diesem ausgepresst wird.

Der Verdichtungsfaktor beim Pressen (also die Volumenreduzierung des Versatzes beim Pressen) liegt bevorzugt im Bereich von 2 bis 3.

Vor dem Formen des Versatzes kann dieser gemischt werden, um die Komponenten des Versatzes gleichmäßig über das Volumen des Versatzes zu verteilen.

Das Beaufschlagen des geformten Versatzes mit Druck und Temperatur geschieht derart, dass die Calciumoxid umfassende Komponente, die Siliciumdioxid umfassende Komponente und das Wasser des Versatzes Xonotlit ausbilden. Dem Fachmann sind die notwendigen Umgebungsbedingungen, also insbesondere auch der notwendige Druck und die notwendige Temperatur bekannt, um aus diesen Komponenten des Versatzes durch Druck und Temperatur Xonotlit zu bilden.

Bevorzugt wird der Versatz im Autoklaven mit Druck und Temperatur beaufschlagt. Bevorzugt kann ein Autoklav gemäß dem Stand der Technik, insbesondere ein industrieller Autoklav verwendet werden.

Beispielsweise kann ein industrieller Autoklav verwendet werden, wie er beispielsweise zur Herstellung von Kalksandstein bekannt ist.

Bevorzugt wird der Versatz bei der Durchführung des Verfahrens mit Druck im Bereich von 15 bis 20 bar, noch bevorzugter mit Druck im Bereich von 16 bis 18 bar beaufschlagt. Druck in diesem Sinne ist Überdruck, also Druck, soweit er über den Luftdruck der Atmosphäre am Ort des gemessenen Überdrucks hinausgeht.

Ferner wird der Versatz bevorzugt mit einer solchen Temperatur beaufschlagt, dass sich, insbesondere bei den vorbezeichneten Drücken, ein Sattdampfdruck einstellt. Die hierzu notwendigen Temperaturen sind dem Fachmann bekannt und lassen sich beispielsweise anhand der Dampfdruckkurve von Wasser ermitteln. Insoweit kann der Versatz beispielsweise mit einer Temperatur im Bereich von 200 bis 220°C beaufschlagt werden.

Der Versatz wird für eine solche Dauer mit Druck und Temperatur beaufschlagt, dass sich aus den Komponenten des Versatzes Xonotlit bildet. Hierfür kann vorgesehen sein, den Versatz für eine Dauer im Bereich von 8 bis 20 Stunden, insbesondere für eine Dauer im Bereich von 12 bis 16 Stunden mit Druck und Temperatur zu beaufschlagen.

Während des Beaufschlagens mit Druck und Temperatur bildet sich aus den Komponenten des Versatzes Xonotlit. Ferner können sich während des Beaufschlagens des Versatzes mit Druck und Temperatur, jeweils in Abhängigkeit von der Zusammensetzung des Versatzes sowie dem Druck, der Temperatur und der Dauer des Beaufschlagens, weitere Substanzen aus dem Versatz bilden, insbesondere wenigstens eine der weiteren Substanzen Calciumcarbonat oder weitere CSH-Phasen.

Ferner kann sich der Anteil an Wasser im Versatz während des Beaufschlagens des Versatzes mit Druck und Temperatur ändern. Hieraus ergeben sich auch Unterschiede in der Zusammensetzung von Versatz und Bauplatte hinsichtlich des jeweiligen Massenanteils einiger Komponenten, beispielsweise des expandierten Perlits, der Fasern oder des Anhydrits.

Nach dem Beaufschlagen des Versatzes mit Druck und Temperatur beziehungsweise nach dem Autoklavieren wird eine Bauplatte erhalten. Diese kann beispielsweise anschließend noch getrocknet werden, bevorzugt auf eine Restfeuchte im Bereich von 8 bis 12 Masse-%, bezogen auf die Gesamtmasse der Bauplatte.

Im Übrigen kann die durch das Verfahren erhaltene Bauplatte die hierin offenbarten Merkmale der erfindungsgemäßen Bauplatte aufweisen.

Offenbart, aber nicht Gegenstand der Erfindung, ist auch die Verwendung der erfindungsgemäßen Bauplatte im Trockenbau. Beispielsweise kann diese Verwendung mit der Maßgabe erfolgen, dass die Bauplatte zur Erstellung von Trennwänden, zur Erstellung von Kanälen für elektrische Leitungen, zur Erstellung von Lüftungskanälen, zur Erstellung von Entrauchungskanälen oder zur Verkleidung von Trägern verwendet wird.

Weitere Merkmale der erfindungsgemäßen Bauplatte sowie des offenbarten Verfahrens ergeben sich aus den Ansprüchen sowie dem nachfolgend beschriebenen Ausführungsbeispiel.

Sämtliche Merkmale der Erfindung können, einzeln oder in Kombination, beliebig miteinander kombiniert sein.

Ein Ausführungsbeispiel der Erfindung wird nachfolgend näher beschrieben.

### Ausführungsbeispiel

Gemäß einem Ausführungsbeispiel des Verfahrens wurde zunächst ein Versatz zur Verfügung gestellt, der die Komponenten in den Massenanteilen gemäß der nachfolgenden Tabelle 1, jeweils bezogen auf die Gesamtmasse des Versatzes, umfasste:

**Tabelle 1**

| **Komponente** | **Massenanteil [Masse-%]** |
|---|---|
| Calciumoxid umfassende Komponente | 36,8 |
| Siliciumdioxid umfassende Komponente | 23,6 |
| Expandierter Perlit | 8,3 |
| Cellulosefasern | 1,3 |
| AES-Glasfasern | 0,6 |
| Anhydrid | 1,3 |
| Verdicker | 0,2 |
| Schaumbildner | 0,1 |
| Wasser | 27,8 |

Die Calciumoxid umfassende Komponente lag in Form von Calciumhydroxid vor.

Die Siliciumdioxid umfassende Komponente lag in Form von Quarzmehl vor. Das Quarzmehl lag, bezogen auf die Gesamtmasse des Quarzmehls, zu 95 Masse-% in einer Korngröße unter 50 µm vor. Das Quarzmehl wies eine chemische Zusammensetzung mit 99 Masse-% SiO₂, bezogen auf die Gesamtmasse des Quarzmehls, auf.

Der expandierte Perlit lag zu 100 Masse-%, bezogen auf die Gesamtmasse des expandierten Perlits, in einer Korngröße unter 1,5 mm und zu 98 Masse-% in einer Korngröße unter 1,0 mm vor. Ferner lag der expandierte Perlit, wiederum bezogen auf die Gesamtmasse des expandierten Perlits, zu 95 Masse-% in einer Korngröße zwischen 0,03 und 1,0 mm vor.

Die Cellulosefasern lagen in Form von Kraftcellulosefasern mit einem mittleren Faserdurchmesser von etwa 20 µm und einer mittleren Faserlänge von etwa 1,9 mm vor.

Die AES-Glasfasern wiesen eine chemische Zusammensetzung, bezogen auf die Gesamtmasse der AES-Glasfasern, von 75 Masse-% SiO₂ und 22 Masse-% CaO + MgO auf. Der mittlere Faserdurchmesser lag bei etwa 8 µm.

Der Schaumbildner lag in Form eines Tensids (Sika^{®} Schaumbildner SB 2) und der Verdicker in Form einer modifizierten Methylhydroxyethylcellulose vor.

Der Gesamtanteil an Calciumhydroxid und Quarzmehl wies eine chemische Zusammensetzung auf, bei der das Massenverhältnis von CaO zu SiO₂, bezogen auf die Gesamtmasse an Calciumhydroxid und Quarzmehl, bei 1,103 lag.

Der Versatz wurde in einem Mischer gemischt und anschließend in einer handelsüblichen hydraulischen Presse mit einem Stempel für die Fertigung von Brandschutzplatten bei einem Druck von 0,25 MPa zu einer quadratischen Platten mit einer Seitenlänge von 1.250 mm und einer Dicke von 30 mm gepresst.

Die gepresste Platte wurden anschließend in einem industriellen Autoklaven für 12 Stunden mit einem Druck von 18 bar bei Sattdampfdruck und der sich daraus ergebenden Temperatur (etwa 207°C) beaufschlagt.

Schließlich wurde die entsprechend autoklavierte Platte dem Autoklaven entnommen und in einem Trockenschrank auf eine Restfeuchte von etwa 10 Masse-% getrocknet.

Die danach erhaltene Bauplatte lag in Form einer erfindungsgemäßen Bauplatte mit hohem Feuerwiderstand vor.

Diese Bauplatte umfasste die folgenden Bestandteile in den Massenanteilen gemäß der nachfolgenden Tabelle 2, jeweils bezogen auf die Gesamtmasse der Bauplatte:

**Tabelle 2**

| **Bestandteil** | **Massenanteil [Masse-%]** |
|---|---|
| Xonotlit | 25,6 |
| Expandierter Perlit | 12,0 |
| Cellulosefasern | 1,8 |
| AES-Glasfasern | 0,9 |
| Anhydrid | 0,8 |
| Calciumcarbonat | 1,2 |
| Tobermorit | 24,8 |
| Calciumsilikatische Gelphasen | 21,5 |
| Quarz | 1,9 |
| Scawtit | 9,5 |

Die mineralogische Zusammensetzung der Bauplatte wurde mittels Röntgenbeugungsanalyse nach der Rietveld-Methode bestimmt.

Bei der mikroskopischen Untersuchung der Bauplatte konnte festgestellt werden, dass sich im offenen Porenvolumen des expandierten Perlits Xonotlit gebildet hatte, der die offenen Poren des expandierten Perlits hierdurch weitgehend verschloss.

Die chemische Zusammensetzung der Bauplatte wurde mittels Röntgenfluoreszenzanalyse nach DIN EN ISO 12676:2013-02 bestimmt. Danach wies die Bauplatte die Substanzen in den Massenanteilen gemäß der nachfolgenden Tabelle 3, jeweils bezogen auf die Gesamtmasse der Bauplatte, auf:

**Tabelle 3**

| **Chemischer Bestandteil** | **Massenanteil [Masse-%]** |
|---|---|
| SiO₂ | 45,44 |
| Al₂O₃ | 1,79 |
| Fe₂O₃ | 0,18 |
| BaO | 0,010 |
| MnO | 0,029 |
| TiO₂ | 0,043 |
| V₂O₅ | < 0,001 |
| CaO | 39,60 |
| MgO | 0,53 |
| K₂O | 0,40 |
| Na₂O | 0,59 |
| SO₃ | 0,09 |
| Sonstige | < 0,05 |
| Glühverlust | 11,26 |

Zur Bestimmung des Feuerwiderstandes wurde das Brandverhalten der Bauplatte gemäß DIN EN 1363-1:2012-10 in Form einer Trägerbekleidungsprüfung (Kastenprüfung) ohne Unterkonstruktion durchgeführt, wobei die Beplankungsteile geklammert waren. Danach konnte bei der Bauplatte bei deren Beaufschlagung mit Temperatur gemäß der Einheitstemperaturkurve nach DIN EN 1363-1:2012-10 erst nach 138 Minuten und bei einer Oberflächentemperatur von 1.011 K der Beginn eines Plattendurchhangs festgestellt werden. Die Bauplatte wies damit einen hervorragenden Feuerwiderstand auf.

## Patentansprüche

1. Bauplatte mit hohem Feuerwiderstand, umfassend:
1.1 Xonotlit;
1.2 expandierten Perlit; und
1.3 Fasern ; wobei
1.4 Xonotlit eine Matrix bildet, in die der expandierte Perlit und die Fasern eingebettet sind; und wobei
1.5 die Bauplatte den expandierten Perlit zu wenigstens 50 Masse-%, bezogen auf die Gesamtmasse des expandierten Perlits, in einer Korngröße von höchstens 1,5 mm umfasst.

2. Bauplatte nach Anspruch 1, die den Xonotlit, den expandierten Perlit und die Fasern in einem Anteil von wenigstens 33 Masse-% umfasst.

3. Bauplatte nach wenigstens einem der vorhergehenden Ansprüche, die die Fasern in Form wenigstens einer der folgenden Fasern umfasst: Glasfasern oder Cellulosefasern.

4. Bauplatte nach Anspruch 3, die die Glasfasern in Form von Erdalkali-Silikat-Fasern umfasst.

5. Bauplatte nach wenigstens einem der vorhergehenden Ansprüche, die den Xonotlit in einem Anteil im Bereich von 20 bis 50 Masse-% umfasst.

6. Bauplatte nach wenigstens einem der vorhergehenden Ansprüche, die den expandierten Perlit in einem Anteil im Bereich von 8 bis 20 Masse-% umfasst.

7. Bauplatte nach wenigstens einem der vorhergehenden Ansprüche, die die Fasern in einem Anteil im Bereich von 1,5 bis 10 Masse-% umfasst.

8. Bauplatte nach Anspruch 3, die die Cellulosefasern in einem Anteil im Bereich von 1 bis 6 Masse-% umfasst.

9. Bauplatte nach Anspruch 3, die die Glasfasern in einem Anteil im Bereich von 0,5 bis 5 Masse-% umfasst.

10. Bauplatte nach wenigstens einem der vorhergehenden Ansprüche, die Anhydrit umfasst.

11. Bauplatte nach wenigstens einem der vorhergehenden Ansprüche, die Calciumcarbonat umfasst.

## Claims

1. Construction panel with high resistance to fire, comprising:
1.1 Xonotlite;
1.2 expanded perlite; and,
1.3 fibers; wherein
1.4 xonotlite forms a matrix in which the expanded perlite and the fibers are embedded; and wherein
1.5 the construction panel comprises the expanded perlite amounting to at least 50% by mass, based on the total mass of the expanded perlite, in a grain size of at most 1.5 mm.

2. Construction panel according to claim 1 which comprises the xonotlite, the expanded perlite, and the fibers in a proportion of at least 33% by mass.

3. Construction panel according to at least one of the preceding claims, which comprises the fibers in the form of at least one of the following fibers: glass fibers or cellulose fibers.

4. Construction panel according to claim 3, which comprises the glass fibers in the form of alkaline-earth-silicate fibers.

5. Construction panel according to at least one of the preceding claims, which comprises the xonotlite in a proportion in the range of 20 to 50% by mass.

6. Construction panel according to at least one of the preceding claims, which comprises the expanded perlite in a proportion in the range of 8 to 20% by mass.

7. Construction panel according to at least one of the preceding claims, which comprises the fibers in a proportion in the range of 1.5 to 10% by mass.

8. Construction panel according to claim 3, which comprises the cellulose fibers in a proportion in the range of 1 to 6% by mass.

9. Construction panel according to claim 3, which comprises the glass fibers in a proportion in the range of 0.5 to 5% by mass.

10. Construction panel according to at least one of the preceding claims, which comprises anhydrite.

11. Construction panel according to at least one of the preceding claims, which comprises calcium carbonate.

## Revendications

1. Dalle de construction avec une résistance au feu élevée, comprenant :
1.1 de la xonotlite,
1.2 de la perlite expansée, et
1.3 des fibres, sachant que
1.4 la xonotlite forme une matrice, dans laquelle sont intégrées la perlite expansée et les fibres, et sachant que
1.5 la dalle comprend la perlite expansée pour au moins 50 %/masse, en se référant à la masse totale de la perlite expansée, dans une granulométrie maximale de 1,5 mm.

2. Dalle de construction selon la revendication 1, qui comprend la perlite expansée et les fibres dans une proportion d'au moins 33 %/masse.

3. Dalle de construction selon l'une quelconque des revendications précédentes, qui comprend les fibres sous la forme d'au moins une des fibres suivantes : fibres de verre ou fibres de cellulose.

4. Dalle de construction selon la revendication 3, qui comprend les fibres de verre sous la forme de fibres alcalinoterreuses et de silicate.

5. Dalle de construction selon l'une quelconque des revendications précédentes, qui comprend la xonotlite dans une proportion d'une gamme allant de 20 à 50 %/masse.

6. Dalle de construction selon l'une quelconque des revendications précédentes, qui comprend la perlite expansée dans une proportion d'une gamme allant de 8 à 20 %/masse.

7. Dalle de construction selon l'une quelconque des revendications précédentes, qui comprend les fibres dans une proportion d'une gamme allant de 1,5 à 10 %/masse.

8. Dalle de construction selon la revendication 3, qui comprend les fibres de cellulose dans une proportion d'une gamme allant de 1 à 6 %/masse.

9. Dalle de construction selon la revendication 3, qui comprend les fibres de verre dans une proportion d'une gamme allant de 0,5 à 5 %/masse.

10. Dalle de construction selon l'une quelconque des revendications précédentes, qui comprend de l'anhydrite.

11. Dalle de construction selon l'une quelconque des revendications précédentes, qui comprend du carbonate de calcium.
